# EUROPÄISCHE PATENTSCHRIFT

(11) **EP 0 497 172 B1**
(45) Veröffentlichungstag und Bekanntmachung des Hinweises auf die Patenterteilung: **28.12.1994**
(21) Anmeldenummer: 92100820.7
(22) Anmeldetag: 18.01.1992
(51) Int. Cl.: B01F 17/52, B01F 17/44, B01F 17/42, C09B 67/42, C09B 67/46

(54) **Dispergiermittel**
Dispersing agent
Agent dispersant

(30) Priorität: 22.01.1991 DE 4101692
(43) Veröffentlichungstag der Anmeldung: 05.08.1992
(73) Patentinhaber: HOECHST AKTIENGESELLSCHAFT, 65926 Frankfurt am Main (DE)
(72) Erfinder: Martini, Thomas, Dr., W-6233 Kelkheim (Taunus) (DE); Mees, Bernhard, Dr., W-6239 Eppstein/Taunus (DE); Oppitz, Peter, W-6233 Kelkheim (Taunus) (DE)

(56) Entgegenhaltungen:
- EP-A- 0 026 314
- EP-A- 0 047 882
- EP-A- 0 058 384
- EP-A- 0 065 751
- EP-A- 0 220 655
- US-A- 3 933 424
- US-A- 3 957 680

## Beschreibung

Die Erfindung bezieht sich auf ein Dispergiermittel und wäßrige Dispersionen, welche dieses Dispergiermittel enthalten.

In der EP-A-00 65 751 werden bereits die Verbindungen mit der Formel 1, wie sie im Anspruch 1 als eine Komponente des Dispergiermittels angegeben sind, beschrieben. Sie werden dort beispielsweise als Dispergiermittel für die Herstellung von Pigmentdispersionen und zur Feinverteilung von Farbstoffen eingesetzt. Auch die Verbindungen der Formel 2 des Anspruchs 1 sind bereits bekannt.

Die Anforderungen an den Finish von Pigmenten und Textilfarbstoffen, insbesondere Dispersionsfarbstoffen für Synthetica, sind in den letzten Jahren durch neue Färbeverfahren erheblich gestiegen. Ganz besonders hohe Ansprüche an die Feinverteilung und die Stabilität der Dispersionen fordert das Färben von Wickelkörpern.
Da sich die einzelnen Farbstoffe oft erheblich in ihren Eigenschaften, insbesondere in ihrer Kornverteilung, ihrer Löslichkeit, z.B. in Wasser, unterscheiden, ist die Wirksamkeit der Dispergiermittel meist beschränkt auf einzelne Produkte. So gelingt es mit einigen Ligninsulfonaten nicht, eine ausreichende thermische Stabilität der Dispersionen zu erhalten. Bei anderen Dispergiermitteln stört, daß ihre Wirksamkeit auf den alkalischen Bereich beschränkt ist, oder daß sie selbst die Fasern anfärben und so das Färben heller Nuancen behindern. Ebenso gibt es viele Dispergiermittel, deren Neigung zum Schäumen den Dispergier- und Färbevorgang beeinträchtigt.

Es wurde nun überraschenderweise gefunden, daß eine Mischung von mindestens einer Verbindung der Formel 1 mit mindestens einer Verbindung der Formel 2, welche aus reinem m-Kresol durch Kondensation mit Formaldehyd/Bisulfit hergestellt wurde, ein hervorragendes Dispergiermittel bildet. Wegen ihrer hellen Farbe führen diese Mischungen nicht zu einer Anschmutzung von textilen Geweben, was bei hellen Nuancen besonders wichtig ist. In reinem m-Kresol ist der Anteil von o-Kresol und p-Kresol jeweils kleiner als 1, insbesondere kleiner als 0,1 Gew.-%.

Gegenstand der Erfindung ist somit ein Dispergiermittel auf Basis einer Mischung von mindestens einer Verbindung der Formel 1 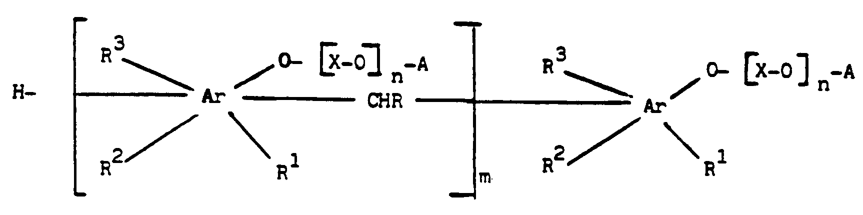
in welcher
- Ar: Benzol oder Naphthalin,
- X: -CH₂-CH₂- und/oder -CH₂-CH(CH₃)-,
- O: bis (m-1) der Reste A Wasserstoff,
- 1: bis m der Reste A Benzoyl und/oder Naphthoyl,
- 1: bis m der Reste A -CO-CH=CH-COOM und/oder -CO-CH₂-CH(SO₃M)-COOM sind, wobei M für ein Kation steht,
- R¹, R² und R³: Wasserstoff und/oder Alkyl mit 1 bis 14 C-Atomen,
- R: Wasserstoff und/oder Alkyl mit 1 bis 9 C-Atomen,
- n: eine Zahl von 1 bis 150 und
- m: eine Zahl von 2 bis 12 bedeuten
mit Verbindungen der Formel 2 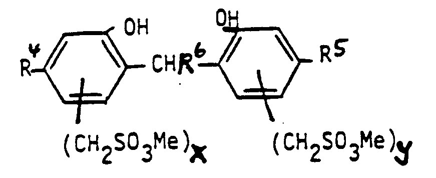
in welcher
- R⁴ und R⁵: unabhängig voneinander Alkyl mit 1 bis 4 C-Atomen bedeuten und in m-Stellung zur Hydroxygruppe stehen
- R⁶: Wasserstoff oder Methyl und
- Me: ein Kation, insbesondere ein Proton, ein Alkali-, Erdalkali- oder Ammonium-Kation bedeutet, und
- x und y: die Ziffern 0, 1 oder 2 darstellen, wobei die Summe dieser Ziffern mindestens 1 beträgt.

Von den Verbindungen der Formel 1 sind besondere diejenigen bevorzugt, in denen
- R¹: Wasserstoff
- R² und R³: Wasserstoff oder Alkyl mit 1 bis 12 C-Atomen,
- R: Wasserstoff und/oder Alkyl mit 1 bis 4 C-Atomen,
- n: eine Zahl von 2 bis 20,
- m: eine Zahl von 4 bis 10 und
- M: Wasserstoff, ein Alkalimetall, einen äquivalenten Anteil eines Erdalkalimetalls
und/oder eine Ammoniumgruppe, die durch niederes Alkyl, insbesondere C₁-C₃-Alkyl, und/oder niederes Hydroxyalkyl substituiert sein kann, sowie eine aus Ammoniak oder niederen Alkylaminen durch Anlagerung von bis zu 150, insbesondere 5 bis 30 Ethylenoxid- und/oder Propylenoxideinheiten erhaltene Ammoniumgruppe bedeuten. Ganz besonders bevorzugt ist R Wasserstoff, R² und R³ Wasserstoff oder Alkyl mit 1 bis 9 C-Atomen, n eine Zahl von 8 bis 20 und m eine Zahl von 4 bis 8. Die Herstellung dieser Verbindungen ist in der EP-A-00 65 751 beschrieben.

Bei der Verbindung der Formel 2 handelt es sich in der Regel um ein Gemisch aus diesen Verbindungen, wie es bei der Umsetzung von mit Alkyl substituierten Phenolen, insbesondere Kresol, mit Formaldehyd oder Acetaldehyd und Bisulfit entsteht. Das für diese Umsetzung vorgesehene Phenolderivat, insbesondere das m-Kresol, sollte in möglichst reiner Form vorliegen und möglichst frei von Nebenprodukten sein. Technische Kresolgemische, die o-Kresol, Phenole, Xylenole und andere Verunreinigungen enthalten, sind für das Dispergiermittel der Erfindung nicht geeignet, da sie selbst die Fasern anfärben und das Färben von hellen Nuancen verhindern.

Das Gewichtsverhältnis der Verbindungen der Formel 1 zu den Verbindungen der Formel 2 liegt im Bereich von 1:19 bis 19:1, insbesondere 1:4 bis 4:1.

Bei den erfindungsgemäßen Mischungen handelt es sich um oberflächenaktive Substanzen mit äußerst vielseitigen Eigenschaften. Sie sind in Wasser klar löslich und nach der Jodfarbskala (DIN 6162) nahezu bis völlig farblos. Sie senken die Oberflächenspannung nach der Ringabreißmethode (DIN 53 914). Außerdem netzen sie Baumwollgewebe nach der Tauchnetzmethode (DIN 53 901) und sind gegen Alkali sowie starke Säuren unter üblichen Anwendungsbedingungen der Tenside beständig.

Gegenstand der Erfindung sind ferner die in Anspruch 3 angegebenen Dispersionen von Farbstoffen, Pigmenten, Pflanzenschutz- und Schädlingsbekämpfungsmitteln. Die erfindungsgemäßen Mischungen eignen sich somit hervorragend als Dispergiermittel für die Herstellung der Dispersionen von Pigmenten, Farbstoffen sowie für die Formulierung von Pflanzenschutz- und Schädlingsbekämpfungsmitteln, ferner als Emulgier-, Egalisier- und Färbereihilfsmittel zum Färben von natürlichen und synthetischen Fasermaterialien wie Baumwolle, Wolle, Cellulose, Zellwolle, Celluloseacetat und -triacetat, Polyester, Polyamid und Polyacrilnitril oder von Fasermaterialien, die diese Stoffe enthalten.

Die Mischung kann allein, als Gemisch mit anderen Dispergiermitteln oder in Kombination mit anderen tensidischen Verbindungen, Gerüststoffen und anderen üblichen Zusatz- und Hilfsstoffen in Emulgier- und Dispergiermittelformulierungen zur Anwendung kommen. Sie wird ebenfalls eingesetzt als Zusatz zu Farbbädern, Klotzbädern und Pasten für den Textil- und Papierdruck. Das erfindungsgemäße Dispergiermittel ist in jedem Verhältnis mit Wasser verdünnbar und eignet sich dadurch besonders gut zur Herstellung von hochkonzentrierten, fließfähigen Dispersionen organischer und anorganischer Farbmittel.

Für die Herstellung der Mischung können die bei der Herstellung der Einzelkomponenten anfallenden 15 - 50 %igen wäßrigen Lösungen direkt verwendet werden. Man kann aus diesen Lösungen aber auch vorher das Wasser, etwa durch Sprühtrocknung, entfernen.

Gegenstand der Erfindung sind außerdem die in Anspruch 4 genannten Farbbäder, Klotzbäder und Pasten. Als Farbstoffe eignen sich alle schwerlöslichen Farbstoffe und Pigmente wie Küpenfarbstoffe und Azofarbstoffe, besonders aber Dispersionsfarbstoffe. Diese Farbstoffe werden als Preßkuchen oder in einzelnen Fällen auch in getrockneter Form mit dem Dispergiermittel der Erfindung oder dessen wäßriger Lösung mit möglichst wenig Wasser zu einer pumpfähigen Suspension an einem Dissolver (Schnellrührer mit Sägezahnscheibe) verrührt, wenn nötig zur Homogenisierung über eine Korundscheibenmühle oder ähnliche Kolloidmühlen gegeben und dann im allgemeinen in einer kontinuierlichen Rührwerksmühle mit Quarzitperlen von 1 - 3 mm Durchmesser in eventuell mehreren Durchgängen bis zur gewünschten Feinverteilung gemahlen. Nach dem Mahlen können ebenso wie beim Anrühren weitere Zusätze von Baktericiden, Stellmitteln, wie z.B. Zucker, weiteren Dispergiermitteln und Wasser zur Teigendeinstellung gemacht werden. Zur Pulverherstellung wird ein geeigneter Teig in einem Sprühturm getrocknet und anschließend auf den gewünschten Trockengehalt eingestellt.

Das Verhältnis von Dispergiermittel zu Farbstoffpulver kann in weiten Grenzen variieren und beträgt im allgemeinen 0,3 bis 10, vorzugsweise 0,5 bis 2 Gewichtsteile Dispergiermittel auf ein Teil Farbstoffpulver.

Das Dispergiermittel der vorliegenden Erfindung zeigt eine deutlich verbesserte Dispergierwirkung und Farbstärke-Ausbeute, so daß man mit kleineren Mengen an Dispergiermittel zu stabilen Dispersionen gelangt. Wegen der Empfindlichkeit mancher Farbstoffe und Fasern im alkalischen Bereich ist es ein erheblicher Vorteil dieses Dispergiermittels, daß es im Gegensatz zu den meisten bekannten anionischen Dispergiermitteln neutral reagiert. Es ist somit möglich, damit auch alkaliempfindliche Farbstoffe zu verarbeiten. Auch können mit diesen Dispergiermitteln hergestellte Dispersionen mit anderen empfindlichen, löslichen Farbstoffen, z.B. Reaktivfarbstoffen, kombiniert werden.

Die Erfindung wird anhand der nachstehenden Beispiele näher erläutert.

Als Komponente der Formel 1 werden folgende Verbindungen eingesetzt:
(1) 5-Kern-nonylphenol-novolak-oxethylatmischester-suffosuccinat, hergestellt nach Beispiel 3.1 der EP-A-00 65 751.
(2) 7-Kern-nonylphenol-novolak-oxethylat/oxpropylat-mischester-sulfosuccinat, hergestellt nach Beispiel 3.7 der EP-A-00 65 751.
(3) 7-Kern-nonylphenol-novolak-oxethylat-mischester-sulfosuccinat, hergestellt nach Beispiel 3.6 der EP-A-00 65 751.
(4) 7-Kern-nonylphenol-novolak-oxethylat-mischester-sulfosuccinat, hergestellt nach Beispiel 3.5.8 der EP-A-00 65 751.

Die Herstellung von Komponenten der Formel 2 wird in den nachfolgenden Beispielen 1 bis 4 beschrieben.

### Beispiel 1

353 Gew.-Teile m-Kresol rein, 535 Gew.-Teile Wasser, 465 Gew.-Teile Natriumbisulfit (50 %ig) werden vorgelegt und mit 445 Gew.-Teile wäßriger Formaldehydlösung (30 %ig) versetzt. Nach Stickstoffspülung wird auf 100°C bis zum einsetzenden Rückfluß erhitzt und 24 Stunden bei dieser Temperatur gehatten. Anschließend kühlt man auf 70°C und neutralisiert mit 185 Gew.-Teilen Salzsäure (31 %), nachdem man mit 490 Gew.-Teilen Wasser weiter verdünnt hat. Eine evtl. gelbe Farbe kann mit 2 Gew.-Teilen Natriumdithionit weggebleicht werden. Man erhält ca. 2300 Gew.-Teile als 30 %ige Lösung (pH 7.2).

### Beispiel 2

Das Verfahren des Beispiels 1 wird mit 390 Gew.-Teilen Formaldehyd durchgeführt. Man erhält 2200 Gew.-Teile einer farblosen, ca. 30 %igen Lösung in Wasser. Die Viskosität liegt bei 40 mPas/25°C.

### Beispiel 3

In einem Autoklaven werden nacheinander 310 Gew.-Teile m-Kresol rein, 462 Gew.-Teile Wasser und 420 Gew.-Teile wäßrige Kaliumbisulfitlösung (50 %ig) sowie 335 Gew.-Teile wäßrige Formaldehydlösung (30 %ig) eingefüllt und mit Stickstoff gespült. Nach Abklingen der exothermen Reaktion wird auf 100°C geheizt, der Autoklav verschlossen und 28 Stunden bei dieser Temperatur gehalten. Nach dem Abkühlen wird gemäß Beispiel 1 weiter aufgearbeitet. Man erhält ca. 2100 Gew.-Teile einer ca. 30 %igen Lösung in Wasser. Die Viskosität liegt bei 35 mPas/25°C.

### Beispiel 4

In einem Autoklaven werden nacheinander 350 Gew.-Teile m-Butyl-phenol rein, 456 Gew.-Teile Wasser und 450 Gew.-Teile wäßrige Ammoniumbisulfitlösung (50 %ig) sowie 335 Gew.-Teile wäßrige Formaldehydlösung (30 %ig) eingefüllt und mit Stickstoff gespült. Man verfährt gemäß Beispiel 3 und erhält 2150 Gew.-Teile einer ca. 30 %igen Lösung in Wasser. Die Viskosität liegt bei 60 mPas/25°C.

Die oben genannten Verbindungen (1) bis (4) der allgemeinen Formel 1 und die in den Beispielen 1 bis 4 hergestellten Verbindungen der Formel 2 werden zur Herstellung der erfindungsgemäßen Mischungen gemäß den nachfolgenden Beispielen 5 bis 8 eingesetzt.

### Beispiel 5

180 Gew.-Teile einer ca. 30%igen, wäßrigen Lösung der Verbindung (1) werden mit 600 Gew.-Teilen einer ca. 30 %igen wäßrigen Lösung gemäß Beispiel 3 bei Raumtemperatur verrührt und mit Wasser auf 25% Wirksubstanz eingestellt.

### Beispiel 6

300 Gew.-Teile einer ca. 30 %igen Lösung der Verbindung (2) werden mit 300 Gew.-Teilen einer ca. 30 %igen Lösung gemäß Beispiel 1 bei Raumtemperatur verrührt.

### Beispiel 7

600 Gew.-Teile einer ca. 30 %igen Lösung der Verbindung (3) werden bei Raumtemperatur mit 300 Gew.-Teilen einer ca. 30 %igen Lösung gemäß Beispiel 2 verrührt.

### Beispiel 8

120 Gew.-Teile einer ca. 30 %igen Lösung der Verbindung (4), 120 Gew.-Teile einer ca. 30 %igen Lösung gemäß Beispiel 4 und 600 Gew.-Teile einer ca. 30 %igen Lösung gemäß Beispiel 3 werden bei Raumtemperatur verrührt.

Das erfindungsgemäße Dispergiermittel fördert die Feinverteilung von wasserunlöslichen Farbstoffen und kann in verschiedenen Stadien des Färbe- und Nachbehandlungsprozesses von Textilgut eine Wirksamkeit entfalten.

Die nachstehenden Beispiele 9 bis 13 dienen zur Erläuterung der anwendungstechnischen Vorteile der Erfindung. Die darin angegebenen Prozentangaben sind Gewichtsprozente, sofern nichts anderes vermerkt ist, und beziehen sich im Falle von Textilmaterial jeweils auf das Gewicht der trockenen Ware.

### Beispiel 9

### Färben nach dem Ausziehverfahren

Fäden aus Polyester-Endlos-Material werden auf Färbehülsen gewickelt und in einem Färbeapparat für Kreuzspulen in einem Färbebad behandelt. Der Färbeapparat enthält auf 1 kg Färbgut 10 l Wasser. Dieses Bad enthält 1 g/l Natriumacetat krist., 0,3 cm³/l Essigsäure (60%) und 1 g/l von dem Dispergiermittel des Beispiels 5.

Bei 60°C wird dieses Behandlungsbad abwechselnd von innen nach außen und von außen nach innen durch die Kreuzspulen gepumpt, insgesamt 10 min lang. Diese wechselnde Richtung der Färbeflotte wird während des ganzen Prozesses, solange der Apparat gefüllt ist, beibehalten. Durch diesen Vorlauf entsteht eine gleichmäßige Verteilung des Hilfsmittels und der Chemikalien im Bad und im Färbegut.

Nach diesem Vorlauf wird 2 % des Farbstoffes mit der Formel 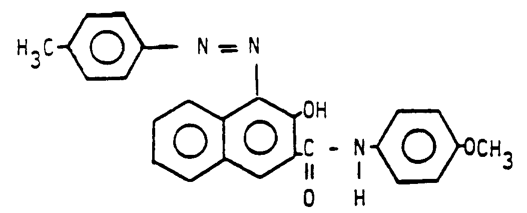
dem Behandlungsbad zugegeben. Zum gleichmäßigen Verteilen wird 10 min mit wechselnder Flottenrichtung wie oben beschrieben behandelt. Danach wird das Behandlungsbad durch eine indirekte Heizung mit 0,5°C pro min auf 130°C aufgeheizt. Während 30 min wird bei 130°C gefärbt, gefolgt von einem Abkühlen mit 2°C pro min auf 80°C. Das Behandlungsbad wird bei 80°C abgelassen. Die Färbung auf dem Färbegut ist gleichmäßig sowie reibecht. Auf den Metallteilen des Färbeapparates, die mit dem Behandlungsbad in Berührung kommen, und den Hülsen treten keine Farbstoffabscheidungen auf. Ohne das erfindungsgemäße Dispergiermittel entsteht eine reibunechte Färbung und eine Ablagerung des Farbstoffes auf den Metallteilen.

### Beispiel 10

### Färben nach dem Ausziehverfahren in Gegenwart eines Egalisiermittels

Ein Garn aus Polyester-Stapelfasern wird auf Färbehülsen gewickelt und in einem Apparat zum Färben von Spulen in einem Färbebad behandelt. Der Färbeapparat enthält auf 1 kg Färbegut 8 l Wasser. Dieses Bad enthält 1 g/l Ammoniumsulfat, 0,2 cm³/l Ameisensäure (85 %), 0,5 % Wirksubstanz eines Egalisiermittels, entsprechend DE-PS 2 508 472 (®Eganal PS, Hoechst AG) und 1,0 g/l des Dispergiermittels entsprechend Beispiel 6.

Der verwendete Farbstoff ist 1,5 % des Farbstoffes Disperse Yellow 42 mit der Konstitution-Nr. 10338 im Color Index. Der Ablauf des Färbeverfahrens entspricht Beispiel 1, wobei das Aufheizen auf 130°C mit 2°C pro min erfolgt. Die Färbung auf dem Garn ist gleichmäßig sowie reibecht. Auf den Metallteilen des Färbeapparates, die mit dem Behandlungsbad in Berührung kommen, und den Hülsen treten keine Farbstoffabscheidungen auf. Ohne das erfindungsgemäße Dispergiermittel entsteht eine ungleichmäßige Färbung mit schlechter Reibechtheit und Ablagerungen des Farbstoffes auf den Metallteilen.

### Beispiel 11

### Färben von Polyester/Baumwollgewebe nach dem Thermosolverfahren

Zum Färben eines Gewebes aus 67 % Polyesterstapelfasern in inniger Mischung mit 33 % Baumwollfasern auf einer Thermosolanlage wird ein wäßriges Klotzbad hergestellt, das die folgenden Zusätze enthält: 10 g/l des Dispergiermittels gemäß Beispiel 1, 2 cm³/l Essigsäure (60 %), 20 g/l des Farbstoffes mit der Formel 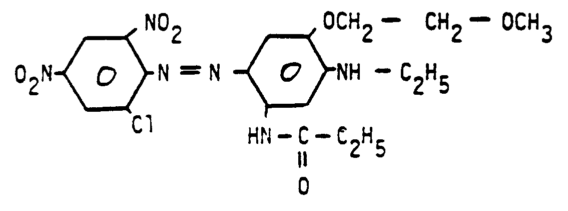
Weiterhin werden 3 g/l Wirksubstanz eines Antimigriermittels entsprechend DE-PS 2 249 443 (®Solidokoll N, Hoechst AG) zugegeben.

Durch Tauchen des Gewebes in diese Klotzflotte und Abquetschen auf einem Zweiwalzenfoulard wird die Klotzflotte auf das Gewebe gebracht. Durch eine entsprechende Einstellung des Abquetschdruckes wird auf 1 kg Gewebe 600 g des Klotzbades aufgeklotzt. Das Gewebe wird mit einer Geschwindigkeit von 60 m/min durch den Foulard geführt. Mit gleicher Geschwindigkeit wird in einem Infrarotvortrockner auf 25 % Restfeuchte fertiggetrocknet. Sogleich schließt sich eine Behandlung bei 210°C während 45 sek. in einer Thermosolanlage an, die ebenfalls mit 60 m/min durchlaufen wird. Nach dem Spülen auf einer sich anschließenden Kontinuewaschanlage werden die verwendeten Hilfsmittel, Chemikalien und Farbstoffreste ausgespült.

Die Färbung zeigt eine gute Gleichmäßigkeit und Reibechtheit. Die Klotzflotte weist nach dem Bereiten und während der folgenden vier Stunden eine gute Stabilität auf. Abscheidungen an den Wandungen der Flottenoberfläche, dem Boden des Foulardtroges oder des Ansatzbehälters, an den Warenführungsaggregaten oder Foulardwalzen sind nicht zu erkennen. Ohne das erfindungsgemäße Dispergiermittel kann es zu einem Bodensatz kommen und/oder zu Belägen, z.B. auf den Foulardwalzen.

### Beispiel 12

### Nachreinigung von Polyester/Zellwollgewebe nach einer Thermosolfärbung

Ein Gewebe aus Polyesterstapelfasergarn in der Webkante und Zellwollfasergarn im Schuß wird auf einer Thermosolanlage mit Foulard, wie in Beispiel 11 beschrieben, gefärbt. Das wäßrige Klotzbad enthält 6 cm³/l Essigsäure (60 %), 20 g/l Reinfarbstoff des Dispersionsfarbstoffes mit der Formel 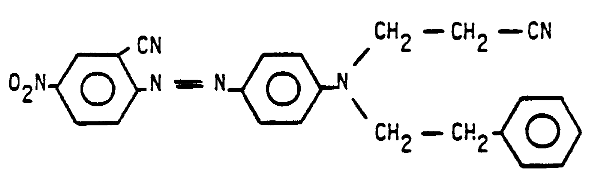
und 3 g/l Wirksubstanz eines Antimigrationsmittels, entsprechend DE-PS 2 249 443 (®Solidokoll N, Hoechst AG).

Wie in Beispiel 11 wird auf einer Kontinuewaschmaschine mit 6 Waschkästen ausgewaschen. Das Gewebe durchläuft jeden Waschkasten in 18 Sekunden. Der erste Waschkasten, der von dem Gewebe durchlaufen wird, enthält 1 g/l Wirksubstanz des Dispergiermittels entsprechend Beispiel 7. Im 6. Waschkasten wird mit Wasser von 20°C nachgespült. Das Zellwollgarn ist durch diese Nachwäsche praktisch ohne Farbstoff, der Polyesterkettfaden zeigt eine gute Reibechtheit. Ohne das erfindungsgemäße Dispergiermittel bleibt das Zellwollgarn stärker mit Farbstoff angetönt, und die Reibechtheit des Polyestermaterials ist schlechter.

### Beispiel 13

### Nachreinigung von Polyester/Wolle-Mischgewebe nach einer Ausziehfärbung

Durch Stricken wird aus einem Garn aus 55 % Polyesterstapelfasern und 45 % Wolle ein Flächengebilde hergestellt, nach Vorwäsche und Thermofixieren wird es auf einem Färbebaum aufgewickelt. Dieser Färbebaum wird in einem Baumfärbeapparat gefärbt, der je 1 kg Färbegut 6 l Wasser, 10 g Essigsäure (60 %) und 4 g Farbstoff enthält. Der verwendete Farbstoff ist 0,4 % Reinfarbstoff des Disperse Yellow 54 mit der Konstitutions-Nr. 47020 im Color-Index. Bei 60°C wird während 10 min das Färbebad in obiger Zusammensetzung von innen durch den Färbebaum und dann durch den aufgewickelten Stoff hindurchgepumpt. Während des ganzen Behandlungsprozesses wird diese Richtung der Badbewegung beibehalten. Anschließend wird mit 1 °C pro min auf 106°C aufgeheizt. Während 30 min wird die Färbetemperatur von 106°C gehalten, dann wird mit 1°C pro min auf 60°C abgekühlt und das Färbebad abgelassen. Das Färbegut wird danach 20 min. bei 80°C mit einem wäßrigen Behandlungsbad behandelt, welches 0,5 % Wirksubstanz des Dispergiermittels entsprechend Beispiel 8 enthält. Danach wird mit 1°C pro min auf 60°C abgekühlt, das Behandlungsbad abgelassen, mit einer Wasserfüllung des Apparates während 100 min bei 20°C nachgespült und das Wasser abgelassen. Die Färbung zeigt eine gute Reibechtheit, die Antönung der Wolle ist weitgehend entfernt. Ohne die Nachreinigung mit dem Dispergiermittel wird eine ungenügende Reibechtheit und eine erhebliche Antönung der Wolle festgestellt.

## Patentansprüche (Patentansprüche für folgende(n) Vertragsstaat(en): DE, FR, GB, IT)

1. Dispergiermittel auf Basis einer Mischung von mindestens einer Verbindung der Formel 1 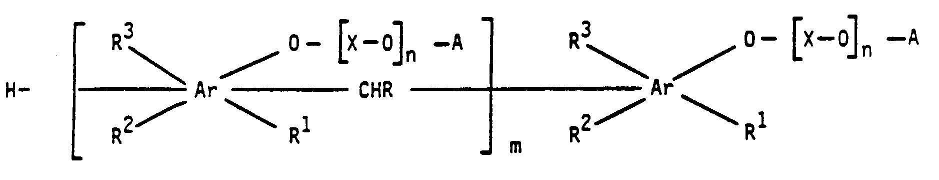 in welcher
Ar Benzol oder Naphthalin,
X -CH₂-CH₂- und/oder -CH₂-CH(CH₃)-,
O bis (m-1) der Reste A Wasserstoff,
1 bis m der Reste A Benzoyl und/oder Naphthoyl,
1 bis m der Reste A -CO-CH=CH-COOM und/oder -CO-CH₂-CH(SO₃M)-COOM sind, wobei M für ein Kation steht,
R¹, R² und R³ Wasserstoff und/oder Alkyl mit 1 bis 14 C-Atomen,
R Wasserstoff und/oder Alkyl mit 1 bis 9 C-Atomen,
n eine Zahl von 1 bis 150 und
m eine Zahl von 2 bis 12 bedeuten
mit Verbindungen der Formel 2 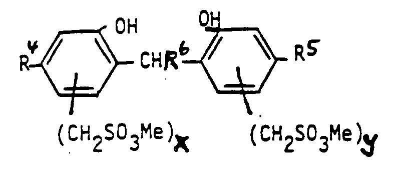 in welcher R⁴ und R⁵ unabhängig voneinander Alkyl mit 1 bis 4 C-Atomen bedeuten und in m-Stellung zur Hydroxygruppe stehen, R⁶ Wasserstoff oder Methyl und Me ein Kation, insbesondere ein Proton oder ein Alkali-, Erdalkali- oder Ammonium-Kation bedeutet, und x und y die Ziffern 0, 1, 2 darstellen, wobei die Summe dieser Ziffern mindestens 1 beträgt.

2. Mischung aus Verbindungen der Formel 1 mit Verbindungen der Formel 2 in Wasser, wobei das Mischungsverhältnis der Verbindungen der Formel 1 zu denen der Formel 2 zwischen 1:19 bis 19:1, vorzugsweise zwischen 1:4 bis 4:1 liegt.

3. Dispersionen von Farbstoffen, Pigmenten, Pflanzenschutz- und Schädlingsbekämpfungsmittel, dadurch gekennzeichnet, daß sie eine Mischung gemäß Anspruch 1 enthalten.

4. Färbebäder, Klotzbäder und Pasten für den Textil- und Papierdruck, dadurch gekennzeichnet, daß sie eine Mischung gemäß Anspruch 1 enthalten.

## Patentansprüche (Patentansprüche für folgende(n) Vertragsstaat(en): ES)

1. Verfahren zur Herstellung von Dispergiermittel auf Basis einer Mischung von mindestens einer Verbindung der Formel 1 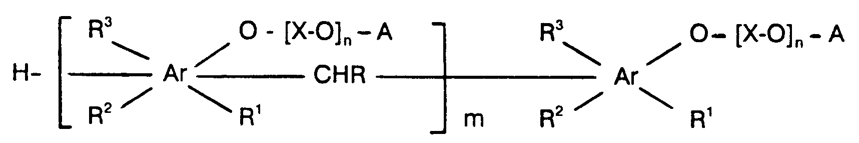 in welcher
Ar Benzol oder Naphthalin,
X -CH₂-CH₂- und/oder -CH₂-CH(CH₃)-,
O bis (m-1) der Reste A Wasserstoff,
1 bis m der Reste A Benzoyl und/oder Naphthoyl,
1 bis m der Reste A -CO-CH=CH-COOM und/oder -CO-CH₂-CH(SO₃M)-COOM sind, wobei M für ein Kation steht,
R¹, R² und R³ Wasserstoff und/oder Alkyl mit 1 bis 14 C-Atomen,
R Wasserstoff und/oder Alkyl mit 1 bis 9 C-Atomen,
n eine Zahl von 1 bis 150 und
m eine Zahl von 2 bis 12 bedeuten
mit Verbindungen der Formel 2 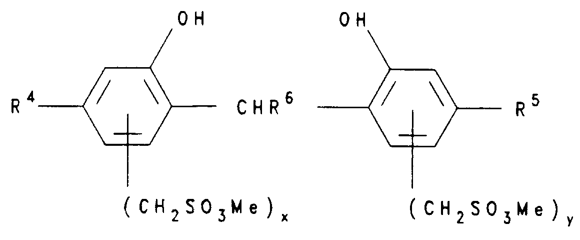 in welcher R⁴ und R⁵ unabhängig voneinander Alkyl mit 1 bis 4 C-Atomen bedeuten und in m-Stellung zur Hydroxygruppe stehen, R⁶ Wasserstoff oder Methyl und Me ein Kation, insbesondere ein Proton oder ein Alkali-, Erdalkali- oder Ammonium-Kation bedeutet, und x und y die Ziffern 0, 1, 2 darstellen, wobei die Summe dieser Ziffern mindestens 1 beträgt, dadurch gekennzeichnet, daß man eine Mischung aus Verbindungen der Formel 1 mit Verbindungen der Formel 2 in Wasser herstellt.

2. Verfahren nach Anspruch 1, dadurch gekennzeichnet, daß das Mischungsverhältnis der Verbindungen der Formel 1 zu denen der Formel 2 zwischen 1:19 bis 19:1, vorzugsweise zwischen 1:4 bis 4:1 liegt.

3. Dispersionen von Farbstoffen, Pigmenten, Pflanzenschutz- und Schädlingsbekämpfungsmittel, dadurch gekennzeichnet, daß sie eine Mischung gemäß Anspruch 1 enthalten.

4. Färbebäder, Klotzbäder und Pasten für den Textil- und Papierdruck, dadurch gekennzeichnet, daß sie eine Mischung gemäß Anspruch 1 enthalten.

## Claims (Claims for the following Contracting State(s): DE, FR, GB, IT)

1. A dispersing agent based on a mixture of at least one compound of the formula 1 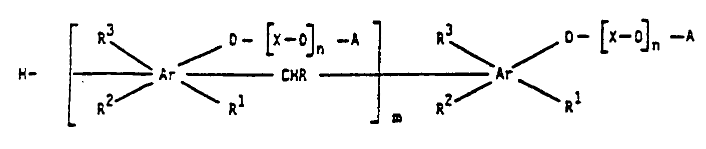 in which
Ar is benzene or naphthalene,
X is -CH₂-CH₂- and/or -CH₂-CH(CH₃)-,
0 to (m-1) of the radicals A are hydrogen,
1 to m of the radicals A are benzoyl and/or naphthoyl,
1 to m of the radicals A are -CO-CH=CH-COOM and/or -CO-CH₂-CH(SO₃M)-COOM where M is a cation,
R¹, R² and R³ are hydrogen and/or alkyl having 1 to 14 carbon atoms,
R is hydrogen and/or alkyl having 1 to 9 carbon atoms,
n is 1 to 150 and
m is 2 to 12
with compounds of the formula 2 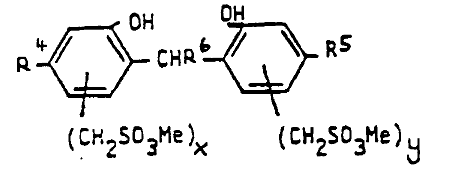 in which R⁴ and R⁵ are, independently of one another, an alkyl group from 1 to 4 carbon atoms and are in the m position relative to the hydroxy group, R⁶ is hydrogen or methyl, and Me is a cation, in particular a proton or an alkali metal cation, alkaline earth metal cation or ammonium cation, and x and y are 0, 1, 2 where the sum of these numbers is at least 1.

2. A mixture of compounds of the formula 1 with compounds of the formula 2 in water in which the mixing ratio of the compounds of the formula 1 to those of the formula 2 is between 1:19 to 19:1, preferably between 1:4 to 4:1.

3. A dispersion of dyes, pigments, plant protection and pest control agents, which contains a mixture as claimed in claim 1.

4. A dyeing bath, a padding bath and a paste for textile and paper printing, which contain a mixture as claimed in claim 1.

## Claims (Claims for the following Contracting State(s): ES)

1. A process for preparing a dispersing agent based on a mixture of at least one compound of the formula 1 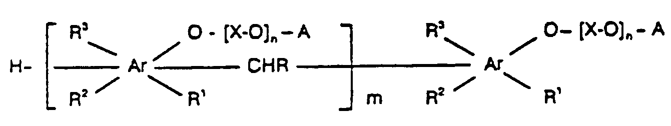 in which
Ar is benzene or naphthalene,
X is -CH₂-CH₂- and/or -CH₂-CH(CH₃)-,
0 to (m-1) of the radicals A are hydrogen,
1 to m of the radicals A are benzoyl and/or naphthoyl,
1 to m of the radicals A are -CO-CH=CH-COOM and/or -CO-CH₂-CH(SO₃M)-COOM where M is a cation,
R¹, R² and R³ are hydrogen and/or alkyl having 1 to 14 carbon atoms,
R is hydrogen and/or alkyl having 1 to 9 carbon atoms,
n is 1 to 150 and
m is 2 to 12
with compounds of the formula 2 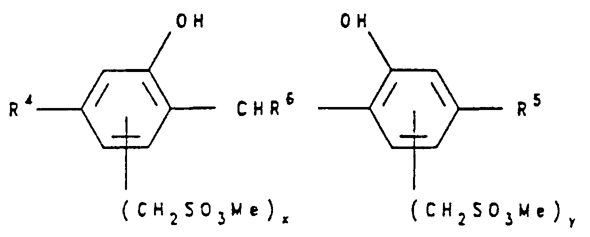 in which R⁴ and R⁵ are, independently of one another, an alkyl group from 1 to 4 carbon atoms and are in the m position relative to the hydroxy group, R⁶ is hydrogen or methyl, and Me is a cation, in particular a proton or an alkali metal cation, alkaline earth metal cation or ammonium cation, and x and y are 0, 1, 2 where the sum of these numbers is at least 1, which comprises preparing a mixture of compounds of the formula 1 with compounds of the formula 2 in water.

2. The process as claimed in claim 1, wherein the mixing ratio of the compounds of the formula 1 to those of the formula 2 is between 1:19 to 19:1, preferably between 1:4 to 4:1.

3. A dispersion of dyes, pigments, plant protection and pest control agents, which contains a mixture as claimed in claim 1.

4. A dyeing bath, a padding bath and a paste for textile and paper printing, which contain a mixture as claimed in claim 1.

## Revendications (Revendications pour l'(les) Etat(s) contractant(s) suivant(s): DE, FR, GB, IT)

1. Agent dispersant à base d'un mélange d'un ou de plusieurs composés de formule 1 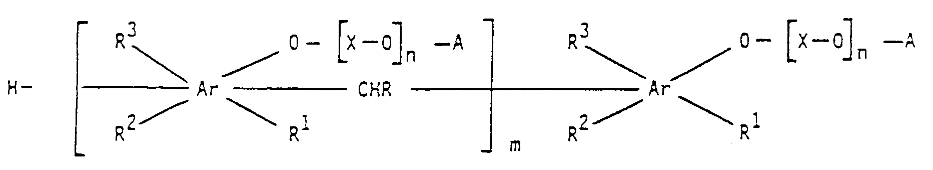 (dans laquelle
Ar représente le benzène ou le naphtalène,
X le groupe -CH₂-CH₂- et/ou -CH₂-CH(CH₃)-,
0 à (m-1) des radicaux A l'hydrogène,
1 à m des radicaux A le radical benzoyle et/ou naphtoyle,
1 à m des radicaux A un radical -CO-CH=CH-COOM et/ou -CH-CH₂-CH(SO₃M)-COOM, M désignant un cation,
R¹, R² et R³ représentent l'hydrogène et/ou des alkyles avec de 1 à 14 atomes de carbone,
R l'hydrogène et/ou un alkyle ayant de 1 à 9 atomes de carbone,
n est un nombre de 1 à 150, et
m un nombre de 2 à 12)
avec des composés de formule 2 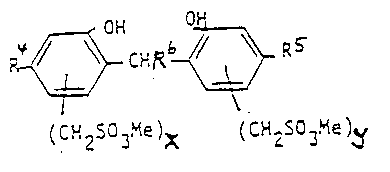 dans laquelle
R⁴ et R⁵ sont indépendamment l'un de l'autre des alkyles ayant de 1 à 4 atomes de carbone, à la position méta par rapport au groupe hydroxylique,
R⁶ représente l'hydrogène ou le groupe méthyle,
Me un cation, en particulier un proton, ou un cation de métal alcalin ou alcalino-terreux ou d'ammonium, et
x et y sont les nombres 0, 1 ou 2, dont la somme est au moins égale à 1.

2. Mélange dans de l'eau de composés de formules 1 et 2 dans un rapport des composés de formule 1 aux composés de formule 2 compris entre 1:19 et 19:1, de préférence entre 1:4 et 4:1.

3. Dispersions de colorants, pigments, produits phytosanitaires ou agents de lutte contre des organismes nuisibles, dispersions caractérisées en ce qu'elles comprennent un mélange selon la revendication 1.

4. Bains de teinture et de foulardage et pâtes d'impression de matières textiles et de papier, caractérisés en ce qu'ils comprennent un mélange selon la revendication 1.

## Revendications (Revendications pour l'(les) Etat(s) contractant(s) suivant(s): ES)

1. Procédé de préparation d'agents dispersants à base d'un mélange d'un ou de plusieurs composés de formule 1 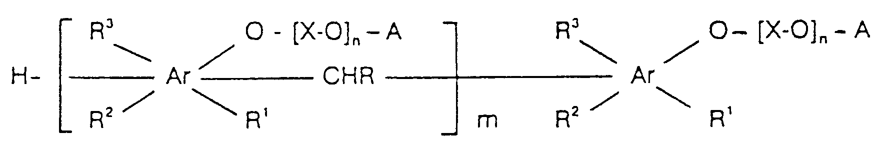 (dans laquelle
Ar représente le benzène ou le naphtalène,
X le groupe -CH₂-CH₂- et/ou -CH₂-CH(CH₃)-,
0 à (m-1) des radicaux A l'hydrogène,
1 à m des radicaux A le radical benzoyle et/ou naphtoyle,
1 à m des radicaux A un radical -CO-CH=CH-COOM et/ou -CH-CH₂-CH(SO₃M)-COOM, M désignant un cation,
R¹, R² et R³ représentent l'hydrogène et/ou des alkyles avec de 1 à 14 atomes de carbone,
R l'hydrogène et/ou un alkyle ayant de 1 à 9 atomes de carbone,
n est un nombre de 1 à 150, et
m un nombre de 2 à 12)
avec des composés de formule 2 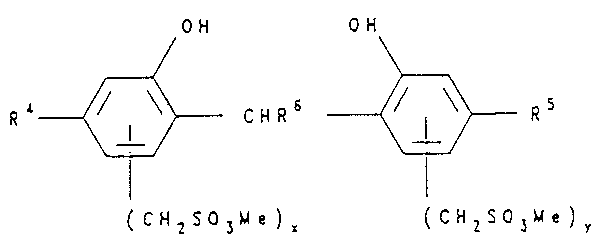 dans laquelle
R⁴ et R⁵ sont indépendamment l'un de l'autre des alkyles ayant de 1 à 4 atomes de carbone, à la position méta par rapport au groupe hydroxylique,
R⁶ représente l'hydrogène ou le groupe méthyle,
Me un cation, en particulier un proton, ou un cation de métal alcalin ou alcalino-terreux ou d'ammonium, et
x et y sont les nombres 0, 1 ou 2, dont la somme est au moins égale à 1,
procédé caractérisé en ce que l'on forme dans de l'eau un mélange de composés de formule 1 et de composés de formule 2.

2. Procédé selon la revendication 1, caractérisé en ce que le rapport des composés de formule 1 aux composés de formule 2 est compris entre 1:19 et 19:1, de préférence entre 1:4 et 4:1.

3. Dispersions de colorants, pigments, produits phytosanitaires ou agents de lutte contre des organismes nuisibles, qui sont caractérisées en ce qu'elles contiennent un mélange selon la revendication 1.

4. Bain de teinture et de foulardage et de pâtes d'impression de matières textiles et de papier, caractérisés en ce qu'ils contiennent un mélange selon la revendication 1.
